Europäisches Patentamt

European Patent Office

Office européen des brevets

(19)

(11) Veröffentlichungsnummer: **0 043 603**
**A1**

(12) # EUROPÄISCHE PATENTANMELDUNG

(21) Anmeldenummer: **81200625.2**

(22) Anmeldetag: **09.06.81**

(51) Int. Cl.³: **G 02 F 1/137**

(30) Priorität: **07.07.80 CH 5190/80**

(43) Veröffentlichungstag der Anmeldung: **13.01.82**
**Patentblatt 82/2**

(84) Benannte Vertragsstaaten: **CH DE GB LI**

(71) Anmelder: **BBC Aktiengesellschaft Brown, Boveri & Cie.,**
**CH-5401 Baden (CH)**

(72) Erfinder: **Kaufmann, Meinolph, Steinäckerstrasse 18,**
**CH-5442 Fislisbach (CH)**
Erfinder: **Scheffer, Terry J, Dr., Höhenstrasse 4,**
**CH-8127 Forch (CH)**

(54) **Gast-Wirt-Flüssigkristallanzeige.**

(57) Gast-Wirt-Flüssigkristallanzeige mit einem frontseitigen Polarisator (5) und annähernd 90° verdrillter Phase. Der Wirt-Flüssigkristall (6) hat positive DK-Anisotropie. Bekannte Anzeigen dieser Art sind bezüglich Kontrastverhältnis, Multiplexierbarkeit und Betrachtungswinkel noch nicht voll befriedigend, und haben überwiegend auch ein negatives Anzeigebild, d.h. helle Ziffern auf dunklem Grund.

Bei der Anzeige nach der Erfindung wird ein Gast-Farbstoff (7, 8) mit negativem Dichroismus verwendet. Dadurch wird nicht nur ein positives Anzeigefeld erzielt, sondern es werden auch die vorgenannten Eigenschaften erheblich verbessert. Eine weitere erhebliche Verbesserung des Betrachtungswinkels wird erzielt durch einen internen Reflektor (9).

62/80
Wi/Kn.

## Gast-Wirt-Flüssigkristallanzeige

Die Erfindung betrifft eine Flüssigkristallanzeige gemäss dem Oberbegriff des Anspruchs 1.

Aus Mol.Cryst.Liq. Crist.54,161(1979) ist eine Gast-Wirt-Flüssigkristallanzeige bekannt. Sie weist einen vor der Flüssigkristallzelle angeordneten Linearpolarisator auf. Die Dielektrizitätskonstante der Gast-Wirt-Flüssigkristallschicht ist positiv anisotrop. Ihr ist ein dichroitischer Farbstoff beigemischt, dessen dichroitisches Verhältnis grösser 1 ist. Dabei ist das pleochroitische bzw. dichroitische Verhältnis des Systems als das Verhältnis $a_1/a_2$ derjenigen Extinktionswerte ("Absorbanz") des Farbstoffes definiert, die gemessen werden, wenn ($a_1$) die molekulare Ausrichtung oder Hauptachse der nematischen Wirt-Phase mit eingebettetem Farbstoff als Gastphase parallel zum E-Vektor des einfallenden Lichtes liegt und ($a_2$) diese molekulare Ausrichtung senkrecht zum E-Vektor des einfallenden Lichtes liegt. Die Lesbarkeit einer derartigen Anzeige ist bei schwacher Beleuchtung schlecht. Die Anzeige wird in Transmission betrieben.

Es sind jedoch auch Gast-Wirt-Flüssigkristallanzeigen bekannt, z.B. aus der DE-OS 24 45 164, mit Gast-Wirt-Flüssigkristallen positiver Anisotropie der Dielektrizitätskonstan-

- 2 -

ten und negativem Dichroismus, die dunkle Zeichen auf hellem Grund aufweisen und die eine verbesserte Lesbarkeit bei schwacher Beleuchtung besitzen. Die Flüssigkristallanzeige gemäss der Offenlegungsschrift weist einen Linearpolarisator auf, der vor der Zelle angeordnet ist. Das Kontrastverhältnis ist jedoch nicht befriedigend.

Es ist Aufgabe der vorliegenden Erfindung, eine Flüssigkristall-Anzeige der eingangs angegebenen Art derart zu verbessern, dass sie bei positivem Kontrast, d.h. dunklen Zeichen auf hellem Grund, einen grossen Betrachtungswinkel, gute Multiplexierbarkeit und ein hohes Kontrastverhältnis aufweist.

Diese Aufgabe wird durch die in Anspruch 1 angegebene Erfindung gelöst.

Bei der erfindungsgemässen Verwendung von negativ dichroitischen Farbstoffmolekülen in Verbindung mit Gast-Wirt-Flüssigkristallen mit positiver Anisotropie der Dielektrizitätskonstanten sind diese im Feld-Aus-Zustand annähernd um 90$^\circ$ verdrillt und im Feld-Ein-Zustand in der Schichtmitte homöotrop ausgerichtet. Im Grenzbereich der die Anzeige begrenzenden Platten bleiben die Farbstoffmoleküle weitgehend in ihrer vorherigen Orientierung. Man erhält auf diese Weise bei positivem Anzeige-Bild nicht nur ein erhöhtes Kontrastverhältnis, sondern auch eine verbesserte Multiplexierbarkeit und einen vergrösserten Sichtwinkel. Bei Verwendung eines internen Reflektors gemäss Anspruch 2 wird insbesondere der Sichtwinkel weiter vergrössert. Zur Fixierung und Orientierung der Flüssigkristall-Moleküle an den Innenflächen der Zellenplatten hat es sich als vorteilhaft erwiesen, die Oberflächen zu reiben.

Die Erfindung wird im folgenden anhand einer ein Ausführungsbeispiel darstellenden Zeichnung näher erläutert.

0043603

Es zeigt

Fig.1 eine schematische Darstellung einer erfindungsgemässen Flüssigkristallanzeige, und

Fig.2 die Helligkeit I einer Anzeige nach der Erfindung
in Abhängigkeit von der anliegenden Spannung U (Kurve A)
und eine Vergleichskurve (B) einer bekannten Anzeige.

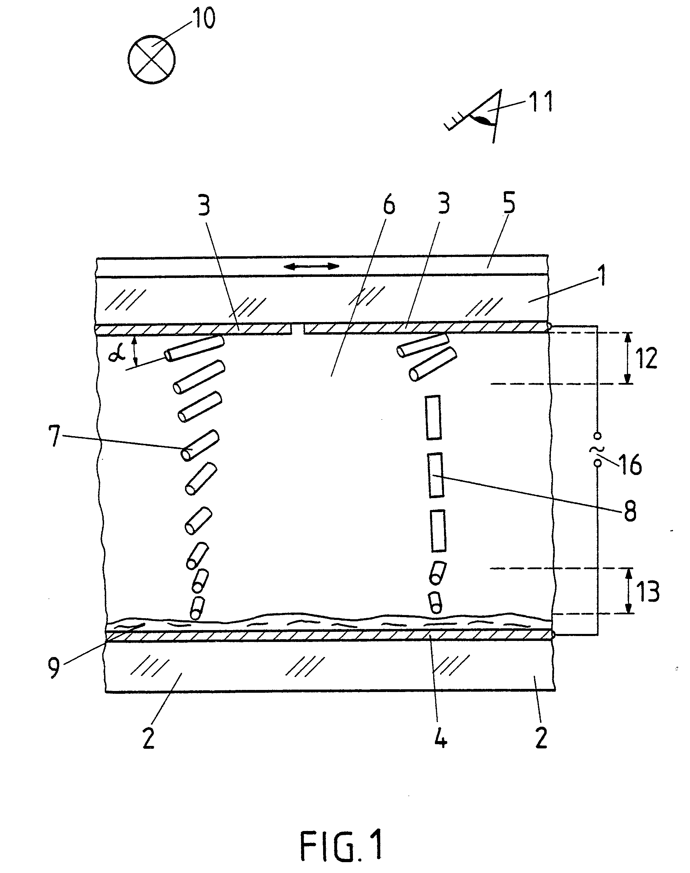

Gemäss Fig.1 bilden zwei in einem bestimmten Abstand, z.B.
12 $\mu$, zueinander distanzierte planparallele Glasplatten 1,2
eine Zelle. An ihren inneren Oberflächen sind sie mit einer
vorderen, durchsichtigen Elektrodenschicht 3 und einer hinteren Elektrodenschicht 4 aus z.B. Zinndioxyd belegt. Sie sind
an eine Wechselspannungsquelle 16 angeschlossen. Die nach
aussen gewandte Oberfläche der vorderen Zellenplatte 1 ist
mit einem Linearpolarisator 5 in Form einer handelsüblichen
Polarisationsfolie versehen. Die hintere Elektrodenschicht 4
ist mit einem internen Reflektor 9 überzogen, der im Siebdruckverfahren aufgebracht ist. Er besteht vorteilhafterweise
aus einer isolierenden Oxydschicht aus $SiO_2$ mit eingelagerten reflektierenden Aluminiumpigmenten, gemäss DE-OS 2629 765.
Die Zelle ist gefüllt mit einem nematischen Wirt-Flüssigkristall 6, z.B. die nematische Mischung E8, erhältlich
von BDH (British Drug House), oder TN-403 von Fa.Hoffmann-
La Roche. In diesem sind als Gast negativ dichroitische Farbstoffmoleküle 7,8 gelöst, z.B. Tetrazin- oder Anthrachinonverbindungen. Die Oberflächen der vorderen Elektrodenschicht 3
und die Oxydschicht des Reflektors 9 sind senkrecht zueinander gerieben. Die vordere Elektrodenschicht 3 ist parallel
zur Polarisationsrichtung des einfallenden Lichtes gerieben.
Damit werden die Direktoren der Moleküle des nematischen
Wirt-Flüssigkristalls an der vorderen Zellenplatte 1 in
der Grenzschicht 12 parallel zur Polarisationsrichtung bzw.
Durchlassrichtung des Polarisators 5 orientiert, und an
der hinteren Zellenplatte 2 in der Grenzschicht 13 senkrecht dazu.

Auf der linken Seite in Figur 1 befindet sich der Flüssigkristall 6 mit Farbstoff 7 in feldfreiem Zustand und weist eine um annähernd $90^\circ$ verdrillte Struktur auf. Die Farbstoffmoleküle in der oberen Grenzschicht 12 bilden mit der vorderen Elektrodenschicht 3 einen Kippwinkel von rund $1^\circ$. Die Orientierung der Farbmoleküle 7 in den Grenzschichten 12, 13 ergibt sich durch die Reibrichtung der Oberflächen der vorderen Elektrodenschicht 3 und der des internen Reflektors 9 Das dichroitische Verhältnis der Fabrstoffmoleküle beträgt 0,17, ist also kleiner als 1. D.h.: Licht mit einer Schwingungsrichtung parallel zur Moleküllängsachse wird minimal, solches senkrecht zur Moleküllängsachse maximal absorbiert. Das Verhältnis der Elastizitätskonstanten von Biegung und Spreizung des nematischen Wirt-Flüssigkristalls $k_{33}/k_{11}$ beträgt rund 1,5.

Auf der rechten Seite in Fig. 1 stehen die Farbstoffmoleküle 8 im mittleren Bereich der Flüssigkristallschicht unter einem elektrischen Feld und sind somit senkrecht, zur Polarisationsrichtung des einfallenden Lichts orientiert. Mit einer derartigen Flüssigkristall-Anzeige kann z.B. der Multiplexgrad von 7/1 erreicht werden.

Die mit 10 und 11 bezeichneten Symbole in der Fig. stellen die Lichtquelle und den Betrachter dar.

Die Wirkungsweise ist folgende:

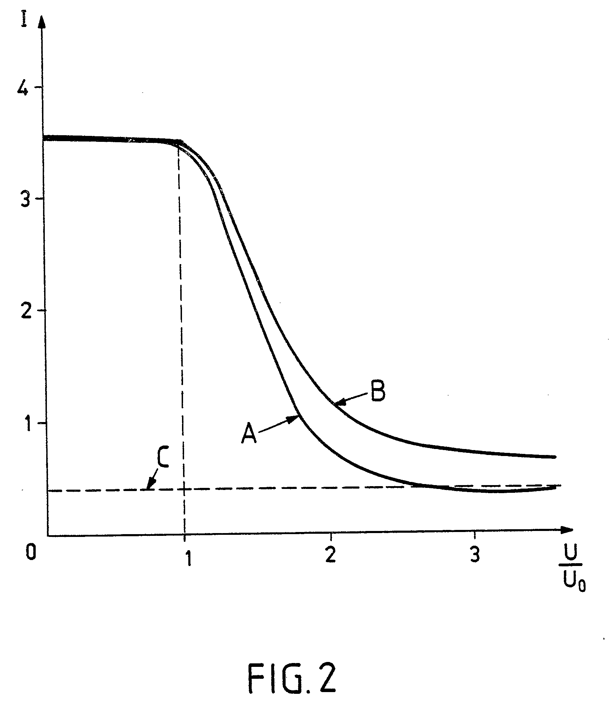

Nach Linearpolarisierung durch den Polarisator 5 tritt das von der Lichtquelle 10 kommende Licht durch die Glasplatte 1 und die durchsichtigen vorderen Elektrodenschichten 3 in den Flüssigkristall 6 ein. Im feldfreien Zustand (links in der Figur) dreht sich der elektrische Feld-Vektor des linearpolarisierten Lichts gemäss der jeweiligen Orientierung der Flüssigkristall-und der Farbstoffmoleküle Die Achse maximaler Absorption der Farbstoffmoleküle steht in diesem Fall immer senkrecht zum elektrischen Feldvektor des Lichts. Es erfolgt demnach wenig Absorption und das Licht gelangt bis zum Reflektor 9. Nach Reflexion am internen Reflektor 9 tritt das Licht dann aus der Zelle in Richtung entgegen der Einfallsrichtung wieder aus. Der Beobachter 11 sieht eine gleichmässig helle Fläche. Im Feld-Ein-Zustand (rechts in der Figur) sind die Flüssigkristallmoleküle 8 in der Mitte der Zelle parallel zum elektrischen Feld orientiert, die Flüssigkristallmoleküle 8 in der oberen Grenzschicht 12 jedoch nach wie vor parallel zur Polarisationsrichtung des Lichts. Da die Flüssigkristallmoleküle 8 einen Kippwinkel von rund $1^{\circ}$ zur Elektrodenschicht 3 bilden, erfolgt die Umorientierung für alle Fabrstoffmoleküle 8 gleichsinnig. Die senkrecht orientierten Farbstoffmoleküle in der Grenzschicht 13 absorbieren das Licht, da ihre Längsachsen senkrecht, und damit ihre Achsen maximaler Absorption parallel zum elektrischen Feld-Vektor des einfallenden Lichts stehen. Durch die gegenüber bekannten Anzeigen zusätzliche Absorptionswirkung der Farbstoffmoleküle 8 in der Grenzschicht 13 wird das Kontrastverhältnis wesentlich erhöht. Dies führt zu der in Fig. 2 als A dargestellten, sehr steilen Helligkeits-Spannungskennlinie. Kurve B zeigt eine derartige Kennlinie für eine bekannte Anzeige mit einem nematischen, im Feld-Aus-Zustand homogen parallel orientierten Flüssigkristall mit einer Dielektrizitätskonstanten positiver Anisotropie und negativ dichroitischen Farbstoffmolekülen. Die Anzeige weist nur einen frontseitigen Polarisator auf, dessen Durchlassrichtung parallel zur Längsachse der Flüssigkristall-Moleküle im Feld-Aus-Zustand ist. Bei dieser Anzeige erfolgt eine Umschaltung vom homogenen zum im wesentlichen homöotropen Zustand. Aus Fig. 2 ist ersichtlich, dass die Kennlinie A der erfindungsgemässen Anzeige wesentlich steiler abfällt als die Kennlinie B der bekannten Anzeige. Sie erreicht die mit C bezeichnete Gerade des maximalen Kontrastes schon bei im Vergleich zur Kennlinie B relativ niedriger Ansteuerspannung (rund 2,7 $U_o$, mit $U_o$ = Schwellenspannung des Flüssigkristalls).

Durch den sehr steilen Abfall der Helligkeits-Spannungskennlinie A wird ein erhöhter Multiplexgrad im Vergleich zur bekannten Anzeige erreicht und zwar aus folgendem Grund:

Die Ansteuerspannung U für gleiche Helligkeitswerte der Kennlinien A und B ist für Kennlinie A wesentlich geringer. Je kleiner die Differenz von Schwellspannung und Ansteuerspannung für ein bestimmten Helligkeitswert ist, ein umso grösserer Multiplexgrad kann erreicht werden.

Die erfindungsgemässe Anzeige weist zudem sehr gute Blickwinkelcharakteristik auf (rund 60°), und ist völlig parallaxenfrei.

Die Multiplexierbarkeit wird weiter gefördert durch die Reiborientierung der Moleküle an den Zellenplatten, den besonderen Wert des Kippwinkels $\alpha$ , und den besonderen Wert des Verhältnisses $k_{33}/k_{11}$. Die Ausrichtung des Polarisators parallel zur Orientierung der an die Frontplatte angrenzenden Moleküle, sowie der besonders kleine Wert des dichroitischen Verhältnisses. verbessern insbesondere den Kontrast der Anzeige.

- 7 -

Bezeichnungsliste

1 vordere Zellen-Platte

2 hintere Zellen-Platte

3 vordere Elektrodenschicht

4 hintere Elektrodenschicht

5 Linearpolarisator

6 Wirt-Flüssigkristall

7 dichroitischer Farbstoff im feldfreien Zustand

8 dichroitischer Farbstoff im durch elektrisches Feld deformierten Zustand

9 interner Reflektor

10 Lichtquelle

11 Betrachter

12 oberer Grenzschichtbereich

13 unterer Grenzschichtbereich

16 Wechselspannungsquelle

$\alpha$ Kippwinkel

A Spannungs-Helligkeitskennlinie für die erfindungsgemässe Gast-Wirt-Zelle

B Spannungs-Helligkeitskennlinie einer bekannten Gast-Wirt-Zelle mit positiver Anisotropie der Dielektrizitätskonstanten und negativem Dichroismus der Farbstoffmoleküle in homogen parallel orientierten Zellen

U Ansteuerspannung

$U_o$ Schwellspannung

I Helligkeit

Patentansprüche

1. Flüssigkristallanzeige mit einer aus zwei planparallelen Zellenplatten (1, 2) bestehenden Zelle, die an ihren Innenflächen mit Elektrodenschichten (3, 4) versehen sind, von denen wenigstens die auf der vorderen Zellen-Platte (1) durchsichtig ist, und mit einem nematischen Wirt-Flüssigkristall (6) mit positiv anisotroper Dielektrizitätskonstanze, dem als Gast ein dichroitischer Farbstoff (7, 8) beigegeben ist, wobei die Direktoren der Moleküle des Flüssigkristalls (6) an den beiden Innenflächen der Zellenplatten (1, 2) um annähernd 90$^{\circ}$ zueinander verdreht sind, mit einem Linearpolarisator (5) an der vorderen (1), nicht jedoch an der hinteren Zellenplatte (2), dadurch gekennzeichnet, dass der dem Flüssigkristall (6) zugesetzte Farbstoff (7, 8) ein dichroitisches Verhältnis kleiner eins aufweist.

2. Flüssigkristallanzeige nach Anspruch 1, dadurch gekennzeichnet, dass die hintere Zellenplatte (2) mit einem internen Reflektor (9) versehen ist.

3. Flüssigkristallanzeige nach Anspruch 1, dadurch gekennzeichnet, dass die die Flüssigkristallmoleküle orientierenden Oberflächen an den Zellenplatten (1, 2) gerieben sind.

4. Flüssigkristallanzeige nach Anspruch 1, dadurch gekennzeichnet, dass der Kippwinkel (α) der Flüssigkristallmoleküle und des Farbstoffes (7, 8) ungefähr 1$^{\circ}$ beträgt.

5. Flüssigkristallanzeige nach Anspruch 1, dadurch gekennzeichnet, dass der Polarisator (5) so angeordnet ist, dass

- 2 -

der elektrische Feldvektor des durchtretenden Lichtes parallel zur Richtung der Direktoren der Moleküle an der vorderen Zellenplatte (1) ist.

6. Flüssigkristallanzeige nach Anspruch 1, dadurch gekennzeichnet, dass das dichroitische Verhältnis des Farbstoffes (7, 8) kleiner als 0,17 ist.

7. Flüssigkristallanzeige nach Anspruch 1, dadurch gekennzeichnet, dass das Verhältnis der Elastizitätskonstan für Biegung und Spreizung des nematischen Wirt-Flüssigkristalles (6) $k_{33}/k_{11}$ kleiner als 1,5 ist.

FIG.1

FIG.2

**Europäisches Patentamt**

**EUROPÄISCHER RECHERCHENBERICHT**

Nummer der Anmeldung

0043603

EP 81 20 0625

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 960 750 (AKIO MORIYAMA et al.)<br><br>* Spalte 3, Zeilen 62-68; Spalte 4, Zeilen 1-57; Spalte 6, Zeilen 2-10 * | 1,3 |
| | MOLECULAR CRYSTALS AND LIQUID CRYSTALS, Band 38, Nr.: 1-4, 1977, Gordon and Breach Science Publishers Ltd. (NL)<br>W. HAASE et al.: "The Application of Nematic Liquid Crystals as Anisotropic Solvents in the Optical Absorption Spectroscopy for the Determination of the Polarization of Electronic Transitions of Organic Molecules and Cu(11) - Complexes", Seiten 61-76.<br><br>* Seite 62, letzter Absatz; Seite 63, erster Absatz * | 1 |
| | US - A - 3 960 438 (U. BONNE)<br><br>* Spalte 4, Zeilen 23-28; Figur 4 * | 2 |
| | APPLIED PHYSICS LETTERS, Band 25, Nr. 1, 1. Juli 1974 NEW YORK (US)<br>D.W. BERREMAN: "Dynamics of liquid-crystal twist cells", Seiten 12-15.<br><br>* Seite 13, Tabelle 1 * | 7 |

**KLASSIFIKATION DER ANMELDUNG (Int. Cl.³)**

G 02 F 1/137

**RECHERCHIERTE SACHGEBIETE (Int. Cl.³)**

G 02 F 1/137
1/13
1/01

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26.08.1981 | ARMITANO-GRIVEL |

EPA form 1503.1 06.78